Europäisches Patentamt

European Patent Office

Office européen des brevets

(19)

(11) Veröffentlichungsnummer: **0 005 193**
**B1**

(12) **EUROPÄISCHE PATENTSCHRIFT**

(45) Veröffentlichungstag der Patentschrift: 01.09.82

(51) Int. Cl.³: **B 01 D 13/04, C 08 J 5/22**

(21) Anmeldenummer: 79101117.4

(22) Anmeldetag: 11.04.79

(54) Asymmetrische Ultrafiltrationsmembrane auf der Basis von Zellulosehydrat und Verfahren zu ihrer Herstellung.

(30) Priorität: 13.04.78 DE 2816085

(43) Veröffentlichungstag der Anmeldung:
14.11.79 Patentblatt 79/23

(45) Bekanntmachung des Hinweises auf die Patenterteilung:
01.09.82 Patentblatt 82/35

(84) Benannte Vertragsstaaten:
BE CH FR GB IT LU NL SE

(56) Entgegenhaltungen:
DE - A - 2 419 930
DE - A - 2 621 519
FR - A - 2 099 286
FR - A - 2 195 469
FR - A - 2 255 338
FR - A - 2 355 540
US - A - 3 931 067

(73) Patentinhaber: Sartorius GmbH.
Weender Landstrasse 94-108
D-3400 Göttingen (DE)

(72) Erfinder: Nussbaumer, Dietmar, Dr.
Am Kalten Börn 39
D-3400 Göttingen (DE)
Erfinder: Perl, Horst, Dr.
Planckstrasse 8
D-3400 Göttingen (DE)

(74) Vertreter: Deufel, Paul, Dr. et al,
Patentanwälte Müller-Boré.Deufel Schön.Hertel
Siebertstrasse 4
D-8000 München 86 (DE)

Courier Press, Leamington Spa, England.

# 0 005 193

## Asymmetrische Ultrafiltrationsmembrane auf der Basis von Zellulosehydrat und Verfahren zu ihrer Herstellung

Die Erfindung betrifft eine asymmetrische Ultrafiltrationsmembrane auf der Basis von Zellulosehydrat.

Es ist bekannt, die Trocknung von Ultrafiltrationsmembranen nach Imprägneirung mit Glyzerin durchzuführen, wobei jedoch sowohl bei Zelluloseacetatmembranen als auch bei -hydratmembranen eine Verminderung der Durchflussleistung erfolgt und bei Hydratmembranen noch die Schwierigkeit auftritt, dass eine zerstörungsfreie Trockenbarkeit nicht gegeben ist und auch die Eiweissabscheidung nicht erhalten bleibt.

Nun verfügt man zwar über Zelluloseacetatmembranen mit ausgezeichneten Eigenschaften, jedoch sind in manchen Fällen, beispielsweise wenn die zu verwendende Membran gegen Lösungsmittel beständig sein muss, Zelluloseacetatmembranen, und zwar auch Zellulosetriacetatmembranen und die meisten übrigen Polymermembranen nicht zu verwenden, weil sie durch Quellung oder Auflösung zerstört werden. Zellulosehydrat dagegen ist in organischen Lösungsmitteln unlöslich und kan daher ohne Schwierigkeiten eingesetzt werden.

Es ist bekannt, dass asymmetrische Zelluloseacetatmembranen durch Verseifung in Zellulosehydratmembranen gleicher Struktur übergeführt werden können (DE—OS 2 419 930). Die Verseifung ist jedoch stets von einer mehr oder weniger starken Verschlechterung der Membraneigenschaften begleitet (Verminderung der Durchflussrate und der Eiweissdichtigkeit). Dies kann auch für Acetatmembranen von erheblicher nachteiliger Bedeutung sein, nämlich dann, wenn die Verseifung ungewollt während des Betriebes, z.B. infolge extremer pH-Werte, eintritt.

Es ist bekannt, die Trocknung von Ultrafiltrationsmembranen, insbesondere Acetatmembranen, nach Imprägnierung mit Glyzerin durchzuführen, wobei die Imprägnierung eine irreversible Durchflussminderung und das Brüchigwerden oder Schrumpfen verhindern soll. Jedoch ist die Trocknung von asymmetrischen Zellulosehydrat-Ultrafiltrationsmembranen infolge ihres hohen Wasseraufnahmevermögens selbst nach Glyzerinimprägnierung von einer weiteren starken Leistungsminderung bzw. Zerstörung durch Schrumpfung begleitet.

Bekannte Zellulosehydrat-Ultrafiltrationsmembranen müssen daher in feuchtem Zustand gelagert und behandelt werden, was ihre Verarbeitung erschwert. Ferner ist es in diesem Falle erforderlich während der Lagerung Konservierungsmittel zuzusetzen, da Zellulosehydrat in feuchtem Zustand einen Nährboden für Keime (Bakterien, Pilze) darstellt.

Der Erfindung liegt daher die Aufgabe zugrunde, eine Membrane der eingangs genannten Gattung zu schaffen, bei welcher die Eigenschaften der unverseiften Acetatmembrane, nämlich Durchflussleistung, Eiweissabscheidung und zerstörungsfreie Trockenbarkeit, erhalten bleiben.

Diese Aufgabe wird bei einer asymmetrischen Ultrafiltrationsmembrane auf der Basis von Zellulosehydrat gelöst durch den Zusatz von hydrophobierter synthetischer Kieselsäure zur Giesslösung der Ausgangsmembrane aus Zelluloseacetat, die dann durch Verseifung in die Zellulosehydratmembrane überführt wird. Wenn eine Zellulosehydratmembrane gewünscht ist, muss nicht notwendigerweise von Triacetat oder überwiegend Triacetat enthaltenden Giesslösungen ausgegangen werden, obwohl dies wegen der besseren Eigenschaften der ganz oder überwiegend aus Triacetat bestehenden Membranen bevorzugt ist. Ein Zusatz bis zu 30 Gew.-% Diacetat für die Ausgangsmembrane ist jedoch in den meisten Fällen möglich.

Solche Membranen weisen die oben genannten Nachteile nicht mehr auf und können ohne Schwierigkeiten in herkömmlicher Weise mit Glyzerin imprägniert und getrocknet werden.

Überraschenderweise hat es sich gezeigt, dass durch Zusatz von hydrophobierter synthetischer Kieselsäure (z.B. Aérosil R 972 oder SIPERNAT 17, Degussa) zur Giesslösung eine einwandfreie Benetzbarkeit der getrockneten Membrane und Erhaltenbleiben der Durchflussraten erreicht wird. Entgegen den Erwartungen, die man aufgrund der chemisch-physikalischen Eigenschaften der hydrophobierten Kieselsäure zuschreibt, wirkt sich also die Zugabe eines hydrophoben Füllstoffes in Richtung einer Erhöhung oder jedenfalls einer Erhaltung der Hydropholie des Endproduktes aus.

Hydrophobierte synthetische Kieselsäuren sind bekannt. Es handelt sich dabei um entweder pyrogen oder durch Fällung hergestellte Produkte, die, analytisch betrachtet, ziemliches reines $SiO_2$ sind, wobei die an der Oberfläche der Kieselsäure bzw, des $SiO_2$ vorliegenden Hydroxylgruppen mit geeigneten Reaktionspartnern in Wechselwirkung gebracht und die Kieselsäure dadurch hydrophobiert wird. Von den pyrogenen Kieselsäuren ist am bekanntesten der Typ Aerosil der Firma Degussa. Diese Kieselsäuren werden durch Hydrolyse von Siliciumtetrachlorid in einer Knallgasflamme hergestellt und haben über 99,8% $SiO_2$-Gehalt. Sie sind aus amorphen, kugelförmigen Teilchen aufgebaut, die einen Durchmesser von einigen $\mu$m bis 40 $\mu$m besitzen. Bei einem Volumen von ca. 15 ml besitzt 1 g solcher Kieselsäure eine Oberfläche von 100 bis 400 $m^2$ und mehr. Im allgemeinen entspricht die der Bezeichnung nachgesetzte Ziffer in etwa dieser Oberfläche nach BET. Bei der hydrophobierten Kieselsäure ist durch den Hydrophobierungszusatz der $SiO_2$-Gehalt etwas geringer.

Die Fällungskieselsäuren werden im allgemeinen durch Umsetzung von Alkalisilikatlösungen mit Säuren in Form weisser Niederschläge von amorphen Kieselsäuren erhalten, die nach dem Filtrieren und Waschen getrocknet und gegebenenfalls noch vermahlen werden. Das Trocknen erfolgt vor allem

2

durch Sprühtrocknung. Die bekanntesten Produkte dieses Typs sind die Sipernate. SIPERNAT 17 ist ein hydrophobiertes Produkt, nämlich eine durch Sprühtrocknung wässriger Kieselsäuresuspensionen gewonnene Trägerkieselsäure, deren Sekundärteilchen zu etwa 80% im Bereich zwischen 40 und 90 Mikron liegen, wobei jedoch die Grösse und Beschaffenheit der Sekundärteilchen durch die Bedingungen der Sprühtrocknung bestimmt werden. Auch an der Oberfläche dieser hydrophilen Fällungskieselsäuren befinden sich freie Hydroxylgruppen, die durch Umsetzung mit Halogenalkylsilanen zu hydrophoben Kieselsäuren führen, bei denen die Hydroxylgruppen durch organische Reste ersetzt sind. Im Falle von SIPERNAT 17 handelt es sich um das Reaktionsprodukt einer Fällungskieselsäure mit Organochlorsilan. Die mittlere Teilchengrösse der Sekundärteilchen beträgt hierbei nur 3 $\mu$m, die BET-Oberfläche beträgt ca. 110 m²/g und der pH-Wert einer 5%-igen wässrigen Dispersion in Wasser zu Azeton oder Methanol 1:1 beträgt ca. 6.

Bezüglich hydrophober durch Flammenhydrolyse gewonnener Kieselsäure sie hier verwiesen auf die Literaturstelle "Chemiker-Zeitung/Chemische Apparatur" 89 (1965), Seiten 437 bis 440, Heft 13, sowie das Prospekt der Degussa "Hydrophobes Aerosil", Herstellung, Eigenschaften und Verhalten. Bezüglich hydrophober durch Fällung erhaltener Kieselsäure sei verwiesen auf die Schriftenreihe Anwendungstechnik Pigmente Nr. 30 "SIPERNAT und AEROSIL für die Futtermittelindustrie" der Firma Degussa, Ausgabedatum 20. Juni 1969, wo das Präparat SIPERNAT 17 ausführlich erläutert ist. Die Herstellung dieses Typs von Kieselsäure ist in früheren Publikationen der Firma Degussa erläutert. Auf alle diese Publikationen der Firma Degussa sei ausdrücklich für die Offenbarung Bezug genommen.

Die Verwendung hydrophiler Kieselsäure, beispielsweise vom Typ Aerosil COK 84, 200, führt zur Erhohung der Benetzbarkeit, gleichzeitg aber auch beim Verseifen zu starkem Schrumpfen und zu starker Leistungsminderung beim Trocknen, also praktisch zu all den Nachteilen, die ohne den erfindungsgemäßen Kieselsäurezusatz bei Hydratmembranen beim Verseifen der Acetatmembranen auftreten. Zur Lösung der Aufgabe sind folgende Rahmenwerte erfindungswesentlich.

Verwendet werden müssen in der Gießlösung 2 bis 50 Gew.-%, insbesondere 10 bis 50 Gew.-%, hydrophobierte synthetische Kieselsäure, bezogen auf den Gesamtfeststoffgehalt der Endmembran (Hydrat+Kieselsäure). Da die Membran aus einer Gießlösung aus 8 bis 20 Gew.-% Zellulosacetat, insbesondere Triacetat, gegebenenfalls in Mischung mit Diacetat, als Membranbildner aufweist, ist umzurechnen, wobei gilt, daß, ausgehend von Triacetatmembranen nach dem Verseifen der 1,75-fache Gehalt der Kieselsäure gegenüber der Acetatgießlösung in der Endmembran vorliegt, wenn man auf die vereinigten Feststoffe Hydrat+Kieselsäure in der Endmembran bzw. Triacetat+Kieselsäure in der Ausgangsgießlösung bezieht, da ausgehend von Triacetat, ca. 42% des Gewichtes beim Verseifen entfernt werden. Bei Zusatz von Diacetat ist diese Menge entsprechend kleiner, jedoch kann der Zusatz von Kieselsäure bequem aus dem Molekulargewichtsuntgerschied zwischen Triacetat und Diacetat errechnet werden und wird deswegen hier immer bezogen auf Hydrat angegeben. Wenn man demnach in der Hydratmembran 3,5% Kieselsäure, bezogen auf Hydrat+Kieselsäure, wünscht, würde dies in der Ausgangslösung bei Einsatz von Zellulosetriacetat eine Menge von 2,0 Gew.-% Kieselsäure bedeuten.

Die mechanische Festigkeit sinkt bei zu hohem Kieselsäuregehalt, z.B. wenn diese mehr als 50% des Gesamtfeststoffgehaltes der verseiften Hydratmemtbran (und demgemäss ca. 87% in der Geisslösung bei Verwendung von Triacetat) beträgt.

Da man zur Herstellung von Hydratmembranen von Acetatmembranen ausgeht, sei bezüglich der Zusammensetzung der Giesslösung und der Giessbedingungen auf die bekannte Arbeitsweise für asymmetrische Acetatmembranen verwiesen.

Das Verhältnis von Azeton zu Dioxan in der Giesslöung beträgt 2:1 bis 1:2, vorzugsweise 0,8 bis 1,2:1.

Der Anteil an Formamid, bezogen auf den Feststoffgehalt, bestimmt die Abscheidegrenze. Je nach erwünschter Abscheidegrenze ist das Verhältnis Feststoffgehalt zu Formamid wie 1:0,8 bis 1:4.

Formamid kann zum Teil oder vollständig ersetzt werden durch andere niedere aliphatische Amide, vorzugsweise Acetamid.

Insbesondere sei verweisen bezüglich Zusammensetzung der Giesslösung und des Giessens von asymmetrischen Triacetatmembranen, die gegebenenfalls auch Diacetat enthalten, auf die DE—OS 2 621 519. Solche Membranen sind besonders bevorzugt.

Als Zellulosetriacetat wird vorzugsweise ein verhältnismässig niedrigmolekulares Triacetat verwendet, insbesondere solche Sorten, deren Viskosität [$\eta$] in 2 %iger Lösung in Methylenchlorid/Methanol 9/1, gemessen nach Höppler bei 25°C, maximal 10 m.Pa.s beträgt. Viskositäten um 7,5 m.Pa.s bis 10 m.Pa.s sind sehr geeignet. Der Acetylgehalt beträgt vorzugsweise mindestens ca. 43%, insbesondere 43,5% oder mehr. Reines Triacetat hätte einen Acetylgehalt von 44,8%, der jedoch in der Praxis kaum erreicht wird. Die Sorten T 900 und T 700 der Firma Bayer sind z.B. sehr gut geeignet. Das Triacetat kann zur Erzielung einer bestimmten Abscheidegrenze teilweise durch Zellulosediacetat, beispielsweise mit bis zu 30% Diacetat, bezogen auf CTA, vermischt sein. Eine geeignete Diacetatsorte ist z.B. E 398—3 (Eastman).

Gemäß besonders bevorzugter Ausführungsformen beträgt der Zusatz 20 bis 45 Gew.-% Kieselsäure, bezogen auf den Gesamtfeststoffgehalt der Endmembran (Hydrat+Kieselsäure), insbesondere 30 bis 35 Gew.-%.

Pyrogene Kieselsäure, insbesondere der Typ R 972 der Firma Degussa, wird derzeit bevorzugt.

Die Ziehung der Membranen erfolgt bevorzugt nach dem Fällbadverfahren unter Verwendung von Eiswasser als Fällmittel. Auch hierzu sei auf die schon erwähnte DE—OS 2 621 519 verwiesen. Vorzugsweise wird die gegossene Membrane vor dem Fällen in Eiswasser 2 bis 90 Sekunden einer Verdampfung ausgesetzt.

Zellulosehydratmembranen mit dem erfindungsgemäßen Zusatz von hydrophobierter Kieselsäure zeigen auch nach der Verseifung des Zellulosetriacetats (oder Dieacetats) mit einer Alkalilösung, insbesondere einer äthanolischen Kalilauge, zu Zellulosehydrat die gleichen Filtrationseigenschaften wie vor dem Verseifen und lassen sich unter Glyzerinzusatz trocknen. Dies ist sehr überraschend, da, wie schon erwähnt, bekanntlich die Verseifung zur Verschlechterung der Membraneigenschaften führt und die Hydratmembranen beim Trocknen stark schrumpfen.

Es ist derzeit nicht bekannt, warum nur der Zusatz von hydrophober Kieselsäure diese günstigen Eigenschaften hat, während hydrophile Kieselsäure, aber auch andere Füllstoffe, diese Eigenschaften nicht zeigen. Mit hoher Wahrscheinlichkeit könnten jedoch die positiven Auswirkungen im Falle der verseiften Membranen auf eine Verminderung des Wasseraufnahmevermögens der Membranmatrix in Gegenwart des hydrophoben Füllstoffes zurückzuführen sein.

Die folgenden Beispiele sollen die Erfindung erläutern. Alle Prozentangaben sind Gew.-%. Um zu zeigen, dass die guten Eigenschaften der Acetatausgangsmembran durch das Verseifen nicht beeinträchtigt werden wenn Kieselsäure vorliegt, werden auch die Eigenschaften der Ausgangsmembran mit und ohne Kieselsäurezusatz gegeben.

Beispiel 1

| Giesslösung | 11% Zellulosetriacetat (T 700, Bayer) |
| | 3% hydrophobierte pyrogene Kieselsäure |
| | (Aerosil R 972, Degussa) |
| | 39% Azeton |
| | 22% Dioxan |
| | 25% Formamid |

Die Geisslösung wird auf eine in einem Fällbad von 0°C rotierende Giesstrommel aufgerakelt. Die Verweilzeit an der Luft, vor dem Eintauchen in das Fällbad beträgt 20 Sekunden. Die ausgefällte ungetrocknete Membrane wird 5 Minuten in 5%-iger äthanolischer Kalilauge verseift, gewaschen, mit 30%-iger Glyzerinlösung imprägniert und getrocknet.

Ein Vergleich der Membraneigenschaften vor und nach der Trocknung führt zu folgenden Ergebnissen:

|  |  | ungetrocknet | getrocknet |
|---|---|---|---|
| $D_{H_2O}$ | (l/m²h) | 301 | 275 |
| $D_{Ser}$ | (l/m²h) | 195 | 175 |
| $R_{Ser}$ | (%) | 98,1 | 99,2 |
| $D_{my}$ | (l/m²h) | 167 | 155 |
| $R_{My}$ | (%) | 95,7 | 96,5 |
| $D_{Cyt}$ | (l/m²h) | 208 | 190 |
| $R_{Cyt}$ | (%) | 68,0 | 66,5 |

Prüfbedingungen:
Filtrationsdruck:          1 bar
Filtrationsgerät:          gerührte Ultrafiltrationszelle
Konzentration der          0,1% Testprotein in 0,9%-iger Kochsalzlösung
   Testlösungen:

Bedeutung der Symbole:
D=Durchflussleistung (1/m²h).
   (Bei Eiweisslösungen ist die durchschnittliche Durchflussleistung bei Aufkonzentrierung der
   0,1%-igen Lösungen auf 2% angegeben).
R=Eiweisszurückhaltung (%).

Indices:
Ser=Serumalbumin vom Rind, MG=67000
My=Myoglobin vom Wal, MG=17000
Cyt=Cytochrom C aus Pferdeherz, MG=12900

Beispiel 1 a (Ausgangsmembran gleicher Zusammensetzung in der Giesslösung, also mit Kieselsäure)
Die Membrane nach Beispiel 1 wird ohne Verseifung gleich nach der Fällung mit einer wässrigen 30%-igen Glyzerinlösung imprägniert und, wie in Beispiel 1, in einem Warmluftstrom von 60°C getrocknet.
Die Membraneigenschaften vor und nach der Trocknung sind wie folgt:

| | | ungetrocknet | getrocknet |
|---|---|---|---|
| $D_{H2O}$ | (l/m²h) | 292 | 282 |
| $D_{Ser}$ | (l/m²h) | 209 | 185 |
| $R_{Ser}$ | (%) | 99,3 | 99,4 |
| $D_{My}$ | (l/m²h) | 160 | 158 |
| $R_{My}$ | (%) | 95,8 | 96,2 |
| $D_{Cyt}$ | (l/m²h) | 250 | 226 |
| $R_{Cyt}$ | (%) | 55 | 68 |

Die Prüfungsbedingungen sind wie in Beispiel 1.

Es ist ersichtlich, dass bei der verseiften Hydratmembran auch nach dem Trocknen die guten Eigenschaften der Ausgangsmembran im wesentlichen beibehalten bleiben.

Das folgende Vergleichsbeispiel 1b zeigt eine Kieselsäure-freie Ausgangsmembran während das darauffolgende Beispiel 1 c die gleiche Membrane nach dem Verseifen, und zwar jeweils ungetrocknet und getrocknet, zeigt.

Beispiel 1b (Kieselsäure-freie Membran)
Giesslösung      14% Zellulosetriacetat (T 700, Bayer)
               39% Azeton
               22% Dioxan
               25% Formamid

Die Membrane wird wie in Beispiel 1 beschrieben hergestellt und getrocknet.

| | | ungetrocknet | getrocknet |
|---|---|---|---|
| $D_{H2O}$ | (l/m²h) | 234 | 138 |
| $D_{Ser}$ | (l/m²h) | 200 | 108 |
| $R_{Ser}$ | (%) | 99,6 | 99,5 |
| $D_{My}$ | (l/m²h) | 130 | 95 |
| $R_{My}$ | (%) | 97,9 | 96,8 |
| $D_{Cyt}$ | (l/m²h) | 217 | 120 |
| $R_{Cyt}$ | (%) | 67 | 70 |

Dieses Beispiel zeigt die ausgezeichneten Eigenschaften der ungetrockneten Acetatmembran und die immerhin noch brauchbaren Eigenschaften der getrockneten Membran, die, wie das folgende Beispiel zeigt, beim Verseifen weitgehend verlorengehen.

Beispiel 1c

Die Membrane nach Beispiel 1c wird wie in Beispiel 1 angegeben verseift und getrocknet. Die Eigenschaften sind wie folgt:

| | | ungetrocknet | getrocknet |
|---|---|---|---|
| $D_{H2O}$ | (l/m²h) | 56,8 | 41,2 |
| $D_{Ser}$ | (l/m²h) | 53,4 | 40,1 |
| $R_{Ser}$ | (%) | 97,1 | 98,9 |
| $D_{My}$ | (l/m²h) | 48,8 | 40,1 |
| $R_{My}$ | (%) | 90,5 | 95,4 |
| $D_{Cyt}$ | (l/m²h) | 55,2 | 40,0 |
| $R_{Cyt}$ | (%) | 50,0 | 55,0 |

Die Prüfbedingungen sind wie in den vorhergehenden Beispielen angegeben.

Zum Unterschied von der Membrane nach Beispiel 1, die die Eigenschaften des unverseiften Ausgangsmaterials weitgehend beibehält, ist in Abwesenheit des Füllstoffes die Verseifung von einer drastischen Verminderung der Durchflussraten (bei reinem Wasser auf 24% des Ausgangswertes) begleitet. Die während der Trocknung auftretenden Schrumpfkräfte führen zu einer teilweisen Ablösung der Membrane von der Trockenunterlage unter Einreissen. Die abgelösten Teile verformen sich unregelmässig, so dass sie anschliessend keine ebene Form mehr aufweisen und somit für den Einsatz in Filtrationsgeräten unbrauchbar sind.

Patentansprüche

1. Asymmetrische, trockene Ultrafiltrationsmembrane auf der Basis von Zellulosehydrat mit einem

**0 005 193**

Zusatz an hydrophobierter synthetischer Kieselsäure von 2 bis 50 Gew.-% des Gesamtfeststoffgehaltes der Endmembrane.

2. Membrane nach Anspruch 1, dadurch gekennzeichnet, daß die synthetische Kieselsäure pyrogene Kieselsäure ist.

3. Membrane nach Anspruch 1, dadurch gekennzeichnet, daß die synthetische Kieselsäure gefällte getrocknete hydrophobierte Kieselsäure ist.

4. Membrane nach Anspruch 1, dadurch gekennzeichnet, daß der Zusatz an hydrophobierter synthetischer Kieselsäure 20 bis 45 Gew.-% des Gesamtfeststoffgehaltes der Endmembrane beträgt.

5. Membrane nach Anspruch 4, dadurch gekennzeichnet, daß der Zusatz an hydrophobierter synthetischer Kieselsäure 30 bis 35 Gew.-% des gesemten Feststoffgehaltes der Endmembrane beträgt.

6. Membrane nach einem der vorhergehenden Ansprüche, dadurch gekennzeichnet, daß sie aus einer Gießlösung aus 8 bis 20 Gew.-% Zelluloseacetat, insbesondere Zellulosetriacetat, gegebenenfalls teilweise erstzt durch Zellulosediacetat, 2 bis 50 Gew.-%, bezogen auf den Gesamtfeststoffgehalt, hydrophobierter Kieselsäure, Aceton und Dioxan in einem Verhältnis von 2:1 bis 1:2, vorzugsweise 0,8 bis 1,2:1 zueinander und aus Formamid, wobei der Anteil an Formamid, bezogen auf den Feststoffgehalt, 0,8:1 bis 4:1 beträgt, und zum Teil oder vollständig durch andere niedere Amide, vorzugsweise Acetamid, ersetzbar ist, nach einem an sich bekannten Fällbadverfahren zur Gewinnung einer Membran und durch übliches Verseifen derselben in eine Hydratmembran erhältlich ist.

7. Verfahren zur Herstellung einer asymmetrischen trockenen Ultrafiltrationsmembrane auf der Basis von Zellulosehydrat mit einem Zusatz nach Anspruch 1 bis 6, dadurch gekennzeichnet, daß man in an sich bekannter Weise eine Gießlösung aus 8 bis 20 Gew.-% Zellulosetriacetat, gegebenenfalls teilweise, insbesondere bis zu 30%, ersetzt durch Zellulosediacetat, aus 1 bis 30 Gew.-%, bezogen auf den Gesamtfeststoffgehalt, an hydrophobierter Kieselsäure, aus Azeton und Dioxan in einem Verhältnis von 2:1 bis 1:2, vorzugsweise 0,8 bis 1,2:1, zueinander und aus Formamid herstellt, wobei der Formamidanteil, bezogen auf den Feststoffgehalt, 0,8:1 bis 4:1 beträgt, und zum Teil oder vollständig durch andere niedere Amide, vorzugsweise Acetamid erstezbar ist, nach dem Fällbadverfahren unter Verwendung von Eiswasser als Fällmittel eine Membran gießt, wobei man vor dem Fällen in Eiswasser die gegossene Membrane 2 bis 90 Sekunden der Verdampfung aussetzt, und die ausgefällte ungetrocknete Membrane einige Minuten in Alkalilösung, insbesondere äthanolischer Kalilauge, zu einer Hydratmembran verseift und, gegebenenfalls nach Imprägnieren mit Glyzerin, trocknet.

**Revendications**

1. Membrane sèche asymétrique d'ultrafiltration à base d'hydrate de cellulose, contenant une addition d'acide silicique synthétique hydrofugé à raison de 2 à 50% en poids de la teneur totale en solides de la membrane finale.

2. Membrane selon la revendication 1, caractérisée par le fait que l'acide silicique synthétique est un acide silicique pyrogène.

3. Membrane selon la revendication 1, caractérisée par le fait que l'acide silicique synthétique est un acide silicique précipité séché hydrofugé.

4. Membrane selon la revendication 1, caractérisée par le fait que l'addition d'acide silicique synthétique hydrofugé représente 20 à 45% en poids de la teneur totale en solides de la membrane finale.

5. Membrane selon la revendication 4, caractérisée par le fait que l'addition d'acide silicique synthétique hydrofugé représente 30 à 35% en poids de la teneur totale en solides de la membrane finale.

6. Membrane selon l'une des revendications précédentes, caractérisée par le fait que l'on peut l'obtenir en partant d'une solution de coulée comprenant 8 à 20% en poids d'acétate de cellulose, en particulier de triacétate de cellulose, éventuellement remplacé partiellement par du diacétate de cellulose, 2 à 50% en poids, relativement à la teneur totale en solides, d'acide silicique hydrofugé, de l'acétone et du dioxanne en un rapport mutuel compris entre 2:1 et 1:2, de préférence entre 0,8:1 et 1,2:1, et de le formamide, le rapport entre formamide et teneur totale en solides étant compris entre 0,8:1 et 4:1 et la formamide pouvant être remplacée partiellement ou complètement par d'autres amides inférieures, de préférence l'acétamide, selon un procédé en lui-même connu à bain de précipitation pour l'obtention d'une membrane et par saponification usuelle de celle-ci en une membrane d'hydrate.

7. Procédé de fabrication d'une membrane sèche asymétrique d'ultrafiltration à base d'hydrate de cellulose contenant un additif, selon les revendications 1 à 6, caractérisé par le fait que de manière en elle-même connue on prépare une solution de coulée comprenant 8 à 20% en poids de triacétate de cellulose, éventuellement remplacé partiellement, en particulier à concurrence de 30%, par du diacétate de cellulose, 1 à 30% en poids, relativement à la teneur totale en solides, d'acide silicique hydrofugé, de l'acétone et du dioxanne en un rapport mutuel compris entre 2:1 et 1:2, de préférence entre 0,8:1 et 1,2:1 et de la formamide, le rapport entre formamide et teneur totale en solides étant compris entre 0,8:1 et 4:1 et la formamide pouvant être remplacée partiellement ou complètement par

6

d'autres amides inférieures, de préférence l'acétamide, que l'on coulé une membrane selon le procédé à bain de précipitation avec utilisation d'eau glacée comme précipitant, en exposant la membrane coulée à l'évaporation pendant 2 à 90 secondes avant la précipitation dans l'eau glacée, et que l'on saponifie quelques minutes la membrane précipitée non séchée dans une solution d'alcali, en particulier une lessive de potasse éthanolique, pour obtenir une membrane d'hydrate, et qu' éventuellement, après l'avoir imprégnée de glycérol, on la sèche.

**Claims**

1. An asymmetrical, dry ultrafiltration membrane on the basis of cellulose hydrate with an addition of hydrophobized synthetic silica of 2 to 50% by weight of the total solids content of the final membrane.

2. A membrane according to claim 1, characterized in that the synthetic silica is pyrogenic silica acid.

3. A membrane according to claim 1, characterized in that the synthetic silica is precipitated, dried, hydrophobized silica.

4. A membrane according to claim 1, characterized in that the addition of hydrophobized synthetic silica amounts to from 20 to 45% by weight of the total content of the final membrane.

5. A membrane according to claim 4, characterized in that the addition of hydrophobized synthetic silica amounts to from 30 to 35% by weight of the total solids content of the final membrane.

6. A membrane according to one of the preceding claims, characterized in that it is obtainable from a pouring solution of from 8 to 20% by weight of cellulose acetate, in particular cellulose triacetate, optionally partly replaced by cellulose diacetate, from 2 to 50% by weight, based on the total solids content, of hydrophobized silica, acetone and dioxane at a ratio of 2:1 to 1:2, preferably 0,8 to 1,2:1 relative to one another and of formamide, with the proportion of formamide, based on the solids content amounting to from 0,8:1 to 4:1, and being in part or entirely replaceable by other lower amids, preferably acetamide, according to a per se known precipitating bath method for recovering a membrane and by customary saponification thereof to form a membrane.

7. A process for preparing an asymmetric dry ultrafiltration membrane on the basis of cellulose hydrate with an addition according to claim 1 to 6, characterized in that a pouring solution of 8 to 20% by weight cellulose triacetate, optionally replaced in part, particularly up to 30%, by cellulose diacetate, of 1 to 30% by weight, based on the total solids content, hydrophobized silicic acid, of acetone and dioxane at a ratio of 2:1 to 1:2, preferably 0,8 to 1,2:1, relative to one another, and of formamide is prepared in per se known manner, with the formamide proportion, based on the solids content, amounting to from 0,8:1 to 4:1, and being in part or entirely replaceable by other lower amides, preferably acetamide, a membrane is poured according to the precipitating bath method under utilization of ice water as precipitating agent, with the cast membrane being exposed for 2 to 90 seconds to evaporation prior to precipitation in ice water, adn the precipitated, undried membrane is saponified for a few minutes in alkaline solution, particularly ethanolic potassium hydroxide solution, to form a hydrate membrane and is dried, optionally after impregnation with glycerol.